# EUROPEAN PATENT SPECIFICATION

(11) **EP 4 021 628 B1**
(45) Date of publication and mention of the grant of the patent: **30.10.2024**
(21) Application number: 20870142.5
(22) Date of filing: 25.09.2020
(51) Int. Cl.: B01J 13/00, C08K 3/00, C09K 21/00, B32B 5/18, B32B 27/06, B32B 27/20, B32B 27/28

(54) **A MULTILAYER COMPOSITE FLAME BARRIER AND ITS PRODUCTION METHOD**
MEHRSCHICHTIGE VERBUNDFLAMMENBARRIERE UND VERFAHREN ZU IHRER HERSTELLUNG
BARRIÈRE ANTI-FLAMME COMPOSITE MULTICOUCHE ET SON PROCÉDÉ DE PRODUCTION

(30) Priority: 26.09.2019 TR 201914698
(43) Date of publication of application: 06.07.2022
(73) Proprietor: Basoglu Kablo Ve Profil Sanayi Ve Ticaret Anonim Sirketi, 14240 Bolu (TR)
(72) Inventor: BASOGLU, Halil Ibrahim, 14240 Merkez Bolu (TR)
(74) Representative: Yamankaradeniz, Kemal
(86) International application number: PCT/TR2020/050890
(87) International publication number: WO 2021/061083

(56) References cited:
- WO-A1-2017/016831
- CA-A1- 2 555 756
- CN-A- 108 032 570
- CN-A- 109 357 107
- CN-C- 1 309 468
- KR-A- 20130 102 145

## Description

### Technical Field

The invention relates to a multilayer composite flame barrier developed for the purpose of providing high flame resistance and thermal insulation.

The invention relates to a composite flame barrier with sandwich form which is developed with the aim of being used primarily in the defense industry, comprising in respective order; a first silicone blend layer which provides flame resistance, a carbon impregnated aerogel layer which provides lightness and thermal insulation and a second silicone blend layer which provides thermal insulation, mechanical strength and unification and to its production method.

### Present State of Art

Today, materials with homogeneous structure in which aerogel and silicone are used in combination exist. These materials are only used as thermal insulating materials in architectural structures.

These materials which are used in the current art and which include aerogel and silicone do not have any resistance against flame. There is a need for light and durable materials providing flame resistance and thermal insulation to be used mainly in the defense industry.

Applications below with regards to the subject are found in the literature.

CN108032570 relates to a heat insulation material, in particular to a lightweight high-strength marine climate composite heat insulation material and a preparation method thereof.

In the application with number TR 2016 / 12230 and titled "A heat and flame resistant plate production method", method for production of a heat and flame resistant plate which is impact and open flame resistant in environments with a temperature up to 1000ºC and with risk of fire; which does not have leakage or dripping, which does not produce halogen and toxic gases, which acts as a barrier against fire and flame is mentioned. In the production method of the invention, the product with high resistance to the produced temperature, heat and flame is vulcanized by creating a mixture by using silicone polymer and additives. The final product obtained here is flame resistant; however, the lightness of the product is not mentioned.

In the application with number CN109809776 and titled "A Non - flammable Light Panel with Thermal Insulation Properties and its Production Technique"; a panel comprising portland cement, fly ash, micro silica, rubber powder, polystyrene, a modified flame retardant, toluene sulphonic acid, polyethylene glycol, water, modified silicone resin and cellulose. It mentions that the endurance and non - flammability and thermal insulation performance of this light panel is high and therefore mentions its implementations in the construction sector; nonetheless; it does not provide any information regarding its usage in other sectors.

Therefore, due to the shortcomings described above and due to the lack of existing solutions on the subject, a development in the relevant technical area is required.

### Brief Description of the Invention

The present invention relates to a multilayer composite flame barrier and its production method that meet the requirements mentioned above, while eliminating all disadvantages and providing some additional advantages.

An aim of the invention is to develop a composite flame barrier which manifests high resistance against flame by the virtue of the first silicone blend layer it comprises.

Another aim of the invention is to develop a composite flame barrier which manifests high thermal insulation and mechanical strength by the virtue of the second silicone blend layer it comprises.

Another aim of the invention is to develop a composite flame barrier wherein thermal insulation is enhances while the weight is decreased by the virtue of the carbon impregnated aerogel layer it comprises.

In order to accomplish the purposes mentioned above, the invention encompasses a multilayer composite flame barrier with sandwich form comprising a carbon impregnated aerogel layer between a first silicone blend layer and a second silicone blend layer and its production method.

The structural and characteristic features and all advantages of the invention will be understood more clearly through the detailed explanation written with the following figures and references to these figures, and therefore assessment should be made by considering these figures and detailed explanation.

### Brief Description of Drawings

- **Figure 1**: shows a lateral sectional view of the flame barrier of the invention.
- **Figure 2**: shows a perspective view of the flame barrier of the invention.

Drawings do not necessarily have to be scaled, and details that are not necessary to understand the current invention may have been omitted. Furthermore, elements that are at least largely identical, or at least have largely identical functions, are denoted by the same number.

### Reference Notes

- **1**: Flame Barrier
- **2**: First Silicone Blend Layer
- **3**: Carbon Impregnated Aerogel Layer
- **4**: Second Silicone Blend Layer

### Detailed Description of the Invention

In the herein detailed description, a multilayer composite flame barrier (1) of the invention and its production method are described only for a better understanding of the subject matter, without posing any limitations.

The invention fundamentally is a multilayer composite flame barrier (1) comprising a first silicone blend layer (2) which provides flame resistance, a second silicone blend layer (4) which provides thermal insulation, mechanical strength and unification , and a carbon impregnated aerogel layer (3) which provides lightness and thermal insulation to the flame barrier (1) by being connected between the said first silicone blend layer (2) and the second silicone blend layer (4).

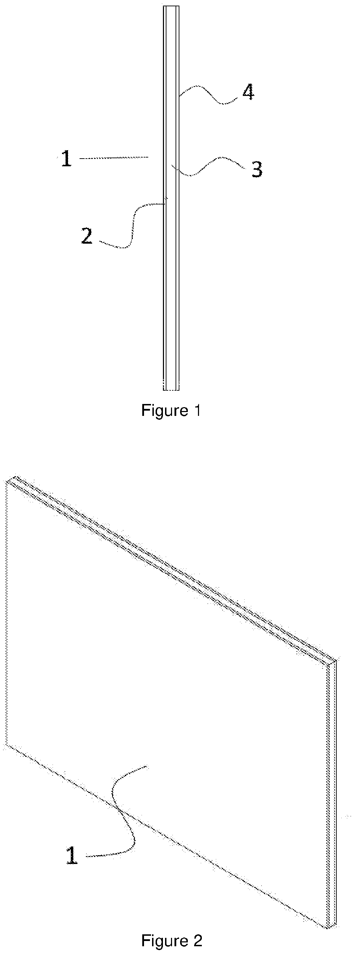

The invention, of which the lateral sectional view is shown in Figure 1, is composed of three main layers in the composite material class. On the outer surface, the flame resistant first silicone mixture layer (2) which is directly exposed to the flame is located, a carbon impregnated aerogel layer (3) with high flame resistance and thermal insulation is located under that and a second silicone mixture layer (4), which enables the structure to remain monolithic, is located in the inner surface.

The flame barrier (1), which is developed within the scope of the invention, comprises a first silicone mixture layer (2) with weight - wise ratio of 30 - 40 %, a carbon impregnated aerogel layer (3) with weight - wise ratio of 20 - 40 % and a second silicone mixture layer (4) with weight - wise ratio of 30 - 40 %. The preferred and usable weight - wise percentages of the layers composing the invention are shown in Table 1.

**Table 1. Percentage by weight of the layers forming the flame barrier (1)**

| | Preferred Amount Weight - Wise (%) | Usable Amount Weight - Wise (%) |
|---|---|---|
| First Silicone Blend Layer (2) | 40 | 30-40 |
| Carbon Impregnated aerogel Layer (3) | 20 | 20-40 |
| Second Silicone Blend Layer (4) | 40 | 30-40 |

The first silicone mixture layer (2), which is directly exposed to the flame, comprises flame resistant solid silicone within the weight - wise range of 65 - 80 %, calcium carbonate within the weight - wise range of 5 - 7 %, huntite within the weight - wise range of 5 - 7 %, aluminum hydroxide within the weight - wise range of 5 - 7 %, catalyzer within the weight - wise range of 2 - 4 % and pigment powder coat preferably within the weight - wise range of 1 - 2 %. The preferred and usable weight - wise amounts of the components composing this layer (2) are shown in Table 2. The active catalyzer material which decreases the activation energy threshold here can be selected as Trigonax in a preferred structuring of the subject of the invention.

**Table 2. Percentage by weight of the components forming the first silicone blend layer (2)**

| | **Preferred Amount Weight - Wise (%)** | **Usable Amount Weight - Wise (%)** |
|---|---|---|
| Flame Resistant Solid Silicone | 80 | 65-80 |
| Calcium Carbonate | 5 | 5-7 |
| Huntite | 5 | 5-7 |
| Aluminum Hydroxide | 5 | 5-7 |
| Catalyzer | 4 | 2-4 |
| Pigment powder coat | 1 | 1-2 |

The first silicone mixture layer (2), which provides resistance against flame, can maintain its structure without any disintegration or deformation, even though it contacts with the flame obtained by LPG gas, which is at 1000 °C temperature and has a length of 25 cm, for 1 hour in a distance of 10 cm. In an example of the invention, which has a size of 350 * 250 mm and a weight of 1.118 gr, the inner temperature of a panel which is obtained by spreading 2 mm of the first silicone mixture layer (2), 4 mm of the carbon impregnated aerogel layer (3) and 2 mm of the second silicone mixture layer (4) located on the inner surface and which is exposed to a flame with 990 °C temperature for an hour only reached to 53 °C degrees of temperature. In the end of the test, no disintegration or puncture is seen on the plate. Smoke evolution, which has been dense after the third minute, decreased to plausible levels afterwards. External and internal temperature variances regarding this test are given in Table 3.

**Table 3. Internal temperature variance table regarding the panel of the invention exposed to flame at approximately 990°temperature**

| **Time (Mins.)** | **External Temperature (°C)** | **Internal Temperature (°C)** |
|---|---|---|
| 5 | 1024 | 26 |
| 10 | 1001 | 29 |
| 15 | 1002 | 33 |
| 20 | 1004 | 37 |
| 25 | 1004 | 40 |
| 30 | 1003 | 43 |
| 35 | 982 | 45 |
| 40 | 963 | 47 |
| 47 | 974 | 50 |
| 50 | 977 | 51 |
| 55 | 976 | 69 |
| 60 | 975 | 53 |

The layer located under the first silicone blend layer (2) is the carbon impregnated aerogel (3) layer. This layer is composed by impregnating carbon into the aerogel structure with high thermal insulation. This layer enhances the resistance of the invention against flame as well as its thermal insulation. This aerogel - based layer has a porous structure and constitutes 60 % of main structure in volume. Although this layer occupies 60 % of space in volume, it constitutes only 20 % of the main structure weight - wise. Therefore; this layer not only contributes to the properties of flame resistance and thermal insulation, but it also contributes to the lightness of the flame barrier (1) in terms of weight.

A second silicone mixture layer (4) with high thermal insulation is located on the inner surface. This layer ensures that the structure remains in monolithic form and increases the mechanical strength. This layer which provides a unification property comprises solid silicone with insulator properties within the weight - wise range of 70 - 80 %, quartz within the weight - wise range of 10 - 20 %, huntite within the weight - wise range of 5 - 10 %, aluminum hydroxide within the weight - wise range of 3 - 10 %, catalyzer within the weight - wise range of 1 - 2 % and pigment powder coat preferably within the weight - wise range of 1 - 2 %. The preferred and usable weight - wise percentages of this layer are shown in Table 4. Here, the catalyzer can be selected as Trigonax or Perkadox in a preferred structuring of the subject of the invention.

**Table 4. Percentage by weight of the components forming the second silicone blend layer**

| | **Preferred Amount Weight** - **Wise (%)** | **Usable Amount Weight** - **Wise (%)** |
|---|---|---|
| Insulator Solid Silicone | 70 | 70-80 |
| Quartz | 20 | 10-20 |
| Huntite | 5 | 5-10 |
| Aluminum Hydroxide | 3 | 3 - 10 |
| Catalyzer | 1 | 1 - 2 |
| Pigment Powder Coat | 1 | 1 -2 |

The production method of the multilayer composite flame barrier (1) of the invention fundamentally comprises the procedure steps of;
a. mixing the raw materials comprised by the first silicone blend layer (2) in determined amounts,
b. mixing the raw materials comprised by the second silicone blend layer (4) in determined amounts,
c. cutting the carbon impregnated aerogel in the determined sizes, puncturing air channels on it and obtaining the carbon impregnated aerogel layer (3) by pressing into the determined form,
d. spreading and pressing the pre - prepared silicone mixtures into a mould in a manner that the carbon impregnated aerogel layer (3) is located between them.

In order to obtain the first silicone mixture layer (2) and the second silicone blend layer (4) in the flame barrier (1) developed within the scope of the invention; pure solid silicones in base state are processed for a while between two rollers operating in parallel to each other with the aim of providing elasticity. Afterwards, the processing is continued until it dissolves homogeneously within the silicone structure by compensating the additives, which are given in Table 2 for the first silicone mixture layer (2) and in Table 4 for the second silicone mixture layer (4), into the silicones by hand lay - up technique with the ratios given in the Tables.

The carbon impregnated aerogel layer (3) in roll form is cut in desired size by limit cutting mould. After this, air channels with 2 mm diameter are punctured onto this surface with intervals of 3 cm in the x and y coordinates. This puncturing process is implemented by an adamantine drill. The carbon impregnated aerogel layer (3) is a material composed of 98 % air and it results in expansion in the structure by dilatation due to heat during covering with the silicone layers (2.4). In order to prevent this; the said air channels are formed mechanically on the carbon impregnated aerogel layer (3). By this way; it is ensured that the structure can be covered in monolithic form and with desired measures. These air channels hold great significance in terms of integrating the structures into each other. If these air channels are not punctured or are punctured incorrectly or faultily, problems in the final structure such as expansion, layers not being adhered to each other and deformations can occur due to the air compressed within the press. After forming air channels with puncturing process, the carbon impregnated aerogel layer (3) is formed in the desired manner by being pressed in the vertical axis.

Layers (2,3,4) obtained separately are pressed in groups in layers in a mould with temperature of 135° - 145 °C (preferably 140 °C at most). First, the first silicone mixture layer (2) is spread into the heated mould and afterwards the carbon impregnated aerogel layer (3) is located on top of it. After this, pressure is applied manually. As the last step, the second silicone mixture layer (4) is spread onto this structure and the mould is closed and pressed. The final structure is obtained by curing the silicone layers (2.4) under pressure and heat for 15 minutes. The curing period for the silicone layers (2.4) must be long and the temperature must be low. By this way; the silicone layers (2.4) can penetrate into the air channels punctured on the carbon impregnated aerogel layer (3) within this time period. This results in obtaining a monolithic structure which has a higher mechanical endurance. In a preferred structuring of the flame barrier (1) developed within the scope of the invention, the thickness of the first silicone mixture layer (2) which is put into the mould is selected as 2 mm.

## Claims

1. A multilayer composite flame barrier (1) comprising a first silicone blend layer (2) which provides flame resistance and a second silicone blend layer (4) which provides thermal insulation, mechanical strength and unification; **characterized by comprising;**
a carbon impregnated aerogel layer (3) which provides lightness and thermal insulation to the flame barrier (1) by being connected between the said first silicone blend layer (2) and the second silicone blend layer (4),
the said first silicone blend layer (2) comprises flame resistant solid silicone in the weight - wise range of 65 - 80 %, calcium carbonate in the weight - wise range of 5 - 7 %, huntite in the weight - wise range of 5 - 7 %, aluminum hydroxide in the weight - wise range of 5 - 7 % and catalyzer in the weight - wise range of 2 - 4 %.

2. The flame barrier (1) according to claim 1, **characterized by comprising;** a first silicone blend layer (2) in the weight - wise range of 30 - 40 %, a carbon impregnated aerogel layer (3) in the weight - wise range of 20 - 40 % and a second silicone blend layer (4) in the weight - wise range of 30 - 40 %.

3. The flame barrier (1) according to claim 2, **characterized by comprising;** a first silicone blend layer (2) with the weight - wise ratio of 40 %, a carbon impregnated aerogel layer (3) with the weight - wise ratio of 20 % and a second silicone blend layer (4) with the weight - wise ratio of 40 %.

4. The flame barrier (1) according to claim 1, **characterized in that;** the said first silicone blend layer (2) comprises pigment powder coat in the weight - wise range of 1 - 2 %.

5. The flame barrier (1) according to claim 4, **characterized in that;** the said first silicone blend layer (2) comprises flame resistant solid silicone with the weight - wise ratio of 80 %, calcium carbonate with the weight - wise ratio of 5 %, huntite with the weight - wise ratio of 5 %, aluminum hydroxide with the weight - wise ratio of 5 %, catalyzer with the weight - wise ratio of 4 % and pigment powder coat with the weight - wise ratio of 1 %.

6. The flame barrier (1) according to any one of claims 1 to 3, **characterized in that;** the said second silicone blend layer (4) comprises solid silicone with insulator properties in the weight - wise ratio of 70 - 80 %, quartz in the weight - wise ratio of 10 - 20 %, huntite in the weight - wise ratio of 5 - 10 %, aluminum hydroxide in the weight - wise ratio of 3 - 10 % and catalyzer in the weight - wise ratio of 1 - 2 %.

7. The flame barrier (1) according to claim 6, **characterized in that**; the said second silicone blend layer (4) comprises pigment powder coat in the weight - wise ratio of 1 - 2 %.

8. The flame barrier (1) according to claim 7, **characterized in that**; the said second silicone blend layer (4) comprises solid silicone with insulator properties in the weight - wise ratio of 70 %, quartz in the weight - wise ratio of 20 %, huntite in the weight - wise ratio of 5 %, aluminum hydroxide in the weight - wise ratio of 3 %, catalyzer in the weight - wise ratio of 1 % and pigment powder coat in the weight - wise ratio of 1 %.

9. A production method of the multilayer composite flame barrier (1) according to any one of claims 1 to 8; fundamentally comprises the procedure steps of;
a. mixing the raw materials comprised by the first silicone blend layer (2) in determined amounts,
b. mixing the raw materials comprised by the second silicone blend layer (4) in determined amounts,
and **characterized by comprising** the steps of;
c. cutting the carbon impregnated aerogel in the determined sizes, puncturing air channels on it and obtaining the carbon impregnated aerogel layer (3) by pressing into the determined form,
d. spreading and pressing the pre - prepared silicone mixtures into a mould in a manner that the carbon impregnated aerogel layer (3) is located between them.

10. The method according to claim 9, **characterized in that;** in the procedure step "a" and "b"; pure solid silicone in base state is processed between two rollers preferably operating in parallel to each other with the aim of providing elasticity; afterwards compensating the other raw materials to the silicone preferably by the hand lay - up technique and processing until it dissolves homogeneously in the structure.

11. The method according to claim 9, **characterized in that;** in the procedure step "c"; puncturing air channels with 2 mm diameter with intervals of 3 cm on the carbon impregnated aerogel.

12. The method according to claim 9, **characterized in that**; in the procedure step "d"; temperature of the said mould is between the range of 135°- 145 °C.

13. The method according to claim 9, **characterized in that;** in the procedure step "d"; spreading the pre - prepared silicone mixtures with a thickness of 2 mm.

## Patentansprüche

1. Mehrschichtige Verbundflammenbarriere (1), die eine erste Silikonmischungsschicht (2), die Flammenresistenz bereitstellt, und eine zweite Silikonmischungsschicht (4), die Wärmeisolierung, mechanische Festigkeit und Vereinigung bereitstellt, umfasst, **dadurch gekennzeichnet, dass sie Folgendes umfasst,**
eine mit Kohlenstoff imprägnierte Aerogelschicht (3), die der Flammenbarriere (1) Leichtigkeit und Wärmeisolierung bereitstellt, indem sie zwischen der ersten Silikonmischungsschicht (2) und der zweiten Silikonmischungsschicht (4) verbunden ist,
wobei die erste Silikonmischungsschicht (2) flammenresistentes festes Silikon in dem Gewichtsbereich von 65 - 80 %, Calciumcarbonat in dem Gewichtsbereich von 5 - 7 %, Huntit in dem Gewichtsbereich von 5 - 7 %, Aluminiumhydroxid in dem Gewichtsbereich von 5 - 7 % und Katalysator in dem Gewichtsbereich von 2 - 4 % umfasst.

2. Flammenbarriere (1) nach Anspruch 1, **dadurch gekennzeichnet, dass** sie eine erste Silikonmischungsschicht (2) in dem Gewichtsbereich von 30 - 40 %, eine mit Kohlenstoff imprägnierte Aerogelschicht (3) in dem Gewichtsbereich von 20 - 40 % und eine zweite Silikonmischungsschicht (4) in dem Gewichtsbereich von 30 - 40 % umfasst.

3. Flammenbarriere (1) nach Anspruch 2, **dadurch gekennzeichnet, dass** sie eine erste Silikonmischungsschicht (2) mit dem Gewichtsanteil von 40 %, eine mit Kohlenstoff imprägnierte Aerogelschicht (3) mit dem Gewichtsanteil von 20 % und eine zweite Silikonmischungsschicht (4) mit dem Gewichtsanteil von 40 % umfasst.

4. Flammenbarriere (1) nach Anspruch 1, **dadurch gekennzeichnet, dass** die erste Silikonmischungsschicht (2) Pigmentpulverbeschichtung in dem Gewichtsbereich von 1 - 2 % umfasst.

5. Flammenbarriere (1) nach Anspruch 4, **dadurch gekennzeichnet, dass** die erste Silikonmischungsschicht (2) flammenresistentes festes Silikon mit dem Gewichtsanteil von 80 %, Calciumcarbonat mit dem Gewichtsanteil von 5 %, Huntit mit dem Gewichtsanteil von 5 %, Aluminiumhydroxid mit dem Gewichtsanteil von 5 %, Katalysator mit dem Gewichtsanteil von 4 % und Pigmentpulverbeschichtung mit dem Gewichtsanteil von 1 % umfasst.

6. Flammenbarriere (1) nach einem der Ansprüche 1 bis 3, **dadurch gekennzeichnet, dass** die zweite Silikonmischungsschicht (4) festes Silikon mit isolierenden Eigenschaften in dem Gewichtsanteil von 70 - 80 %, Quarz in dem Gewichtsanteil von 10 - 20 %, Huntit in dem Gewichtsanteil von 5 - 10 %, Aluminiumhydroxid in dem Gewichtsanteil von 3 - 10 % und Katalysator in dem Gewichtsanteil von 1 - 2 % umfasst.

7. Flammenbarriere (1) nach Anspruch 6, **dadurch gekennzeichnet, dass** die zweite Silikonmischungsschicht (4) Pigmentpulverbeschichtung in dem Gewichtsanteil von 1 - 2 % umfasst.

8. Flammenbarriere (1) nach Anspruch 7, **dadurch gekennzeichnet, dass** die zweite Silikonmischungsschicht (4) festes Silikon mit isolierenden Eigenschaften in dem Gewichtsanteil von 70 %, Quarz in dem Gewichtsanteil von 20 %, Huntit in dem Gewichtsanteil von 5 %, Aluminiumhydroxid in dem Gewichtsanteil von 3 %, Katalysator in dem Gewichtsanteil von 1 % und Pigmentpulverbeschichtung in dem Gewichtsanteil von 1 % umfasst.

9. Herstellungsverfahren für die mehrschichtige Verbundflammenbarriere (1) nach einem der Ansprüche 1 bis 8; im Wesentlichen umfassend die folgenden Ablaufschritte,
a. Mischen der Rohmaterialien, die durch die erste Silikonmischungsschicht (2) umfasst sind, in bestimmten Mengen,
b. Mischen der Rohmaterialien, die durch die zweite Silikonmischungsschicht (4) umfasst sind, in bestimmten Mengen,
und **dadurch gekennzeichnet, dass** es die folgenden Schritte umfasst,
c. Schneiden des mit Kohlenstoff imprägnierten Aerogels in die bestimmten Größen, Stechen von Luftkanälen darin und Erhalten der mit Kohlenstoff imprägnierten Aerogelschicht (3) durch Pressen in die bestimmte Form,
d. Verteilen und Pressen der vorgefertigten Silikongemische in eine Form, auf eine Weise, dass sich die mit Kohlenstoff imprägnierte Aerogelschicht (3) zwischen ihnen befindet.

10. Verfahren nach Anspruch 9, **dadurch gekennzeichnet, dass** in den Ablaufschritten "a" und "b" reines festes Silikon im Grundzustand zwischen zwei Walzen verarbeitet wird, die bevorzugt parallel zueinander arbeiten, mit dem Ziel, Elastizität bereitzustellen; anschließend die anderen Rohmaterialien bevorzugt durch die Handauflegetechnik zu dem Silikon kompensiert und verarbeitet werden, bis es sich homogen in der Struktur auflöst.

11. Verfahren nach Anspruch 9, **dadurch gekennzeichnet, dass** in dem Ablaufschritt "c" Luftkanäle mit 2 mm Durchmesser mit Intervallen von 3 cm in das mit Kohlenstoff imprägnierte Aerogel gestochen werden.

12. Verfahren nach Anspruch 9, **dadurch gekennzeichnet, dass** in dem Ablaufschritt "d" Temperatur der Form zwischen dem Bereich von 135 ° - 145 °C ist.

13. Verfahren nach Anspruch 9, **dadurch gekennzeichnet, dass** in dem Ablaufschritt "d" die vorgefertigten Silikongemische mit einer Dicke von 2 mm verteilt werden.

## Revendications

1. Barrière anti-flamme composite multicouche (1) comprenant une première couche de mélange de silicone (2) qui confère une résistance à la flamme et une seconde couche de mélange de silicone (4) qui confère une isolation thermique, une résistance mécanique et une unification ; **caractérisée en comprenant** ;
une couche d'aérogel imprégnée de carbone (3) qui confère légèreté et isolation thermique à la barrière anti-flamme (1) en étant reliée entre ladite première couche de mélange de silicone (2) et la seconde couche de mélange de silicone (4),
ladite première couche de mélange de silicone (2) comprenant du silicone solide résistant à la flamme dans la plage de poids de 65-80 %, du carbonate de calcium dans la plage de poids de 5-7 %, de la huntite dans la plage de poids de 5-7 %, de l'hydroxyde d'aluminium dans la plage de poids de 5-7 % et un catalyseur dans la plage de poids de 2-4 %.

2. Barrière anti-flamme (1) selon la revendication 1, **caractérisée en comprenant** : une première couche de mélange de silicone (2) dans la plage de poids de 30-40 %, une couche d'aérogel imprégné de carbone (3) dans la plage de poids de 20-40 % et une seconde couche de mélange de silicone (4) dans la plage de poids de 30-40 %.

3. Barrière anti-flamme (1) selon la revendication 2, **caractérisée en comprenant** : une première couche de mélange de silicone (2) avec un rapport de poids de 40 %, une couche d'aérogel imprégnée de carbone (3) avec un rapport de poids de 20 % et une seconde couche de mélange de silicone (4) avec un rapport de poids de 40 %.

4. Barrière anti-flamme (1) selon la revendication 1, **caractérisée en ce que** ladite première couche de mélange de silicone (2) comprend un revêtement de poudre pigmentée dans la plage de poids de 1-2 %.

5. Barrière anti-flamme (1) selon la revendication 4, **caractérisée en ce que** ladite première couche de mélange de silicone (2) comprend du silicone solide résistant à la flamme avec un rapport de poids de 80 %, du carbonate de calcium avec un rapport de poids de 5 %, de la huntite avec un rapport de poids de 5 %, de l'hydroxyde d'aluminium avec un rapport de poids de 5 %, un catalyseur avec un rapport de poids de 4 % et un revêtement en poudre pigmentée avec un rapport de poids de 1 %.

6. Barrière anti-flamme (1) selon l'une quelconque des revendications 1 à 3, **caractérisée en ce que** ladite seconde couche de mélange de silicone (4) comprend du silicone solide avec des propriétés isolantes dans un rapport de poids de 70-80 %, du quartz dans un rapport de poids de 10-20 %, de la huntite dans un rapport de poids de 5-10-%, de l'hydroxyde d'aluminium dans un rapport de poids de 3-10 % et un catalyseur dans un rapport de poids de 1-2 %.

7. Barrière anti-flamme (1) selon la revendication 6, **caractérisée en ce que** ladite seconde couche de mélange de silicone (4) comprend une revêtement de poudre pigmentée dans un rapport de poids de 1-2 %.

8. Barrière anti-flamme (1) selon la revendication 7, **caractérisée en ce que** ladite seconde couche de mélange de silicone (4) comprend du silicone solide avec des propriétés isolantes dans un rapport de poids de 70 %, du quartz dans un rapport de poids de 20 %, de la huntite dans le rapport de poids de 5 %, de l'hydroxyde d'aluminium dans le rapport de poids de 3 %, un catalyseur dans le rapport de poids de 1 % et un revêtement de poudre pigmentée dans le rapport de poids de 1 %.

9. Procédé de production de la barrière anti-flamme composite multicouche (1) selon l'une quelconque des revendications 1 à 8 ; comprend fondamentalement les étapes de procédure de :
a. mélange des matières premières comprises dans la première couche de mélange de silicone (2) en quantités déterminées,
b. mélange des matières premières comprises dans le seconde couche de mélange de silicone (4) en quantités déterminées,
et **caractérisé en comprenant** les étapes de :
c. découpage de l'aérogel imprégné de carbone aux dimensions déterminées, perçage des canaux d'air sur celui-ci et obtention de la couche d'aérogel imprégné de carbone (3) par pressage dans la forme déterminée,
d. étalement et pressage des mélanges de silicone préalablement préparés dans un moule de manière à ce que la couche d'aérogel imprégnée de carbone (3) soit située entre eux.

10. Procédé selon la revendication 9, **caractérisé en ce que** dans les étapes de procédure « a » et « b », du silicone solide pur à l'état de base est traité entre deux rouleaux fonctionnant de préférence en parallèle l'un par rapport à l'autre dans le but de conférer de l'élasticité ; ensuite, la compensation des autres matières premières au silicone de préférence par la technique de pose manuelle et le traitement jusqu'à ce qu'il se dissolve de manière homogène dans la structure.

11. Procédé selon la revendication 9, **caractérisé en ce que,** dans l'étape de procédure « c », des canaux d'air de 2 mm de diamètre sont percés à des intervalles de 3 cm sur l'aérogel imprégné de carbone.

12. Procédé selon la revendication 9, **caractérisé en ce que,** dans l'étape de procédure « d » ; la température dudit moule est comprise dans la plage de 135°C-145°C.

13. Procédé selon la revendication 9, **caractérisé en ce que,** dans l'étape de procédure « d » ; les mélanges de silicone préalablement préparés sont étalés avec une épaisseur de 2 mm.
